# EUROPEAN PATENT APPLICATION

(11) **EP 4 755 845 A1**
(43) Date of publication of application: **10.06.2026**
(21) Application number: 25307022.1
(22) Date of filing: 04.12.2025
(51) Int. Cl.: C01B 3/38, C01B 3/48, C01B 3/025, C01B 3/382, C01C 1/04

(54) **DECARBONIZING OF AMMONIA PRODUCTION**

(30) Priority: 09.12.2024 EP 24307057
(71) Applicant: Technip Energies France, 92741 Nanterre Cedex (FR)
(72) Inventor: RIEGMAN, Jan-Jaap, 92741 Nanterre Cedex (FR)
(74) Representative: Edson, Russell Gregory

(57) **Abstract**

A system and method for decarbonizing ammonia production is disclosed. A system may generate a synthesis gas from a hydrocarbon and subsequently produce ammonia from the synthesis gas. The system may include a recuperative reformer for generating a first reformate from the hydrocarbon, and a downstream autothermal reformer for receiving the first reformate and generating a second reformate that can be further processed and synthesized into ammonia. Carbon dioxide emissions associated with producing the ammonia can be reduced by recovering heat in the recuperative reformer and returning recovered heat to the reforming reaction. This can reduce the duty of the recuperative reformer and correspondingly, the required heat output and associated firing of a combustion-based heat source used to provide heat to the recuperative reformer. Hydrogen from an external source can be added to the reformate stream to maintain a desirable hydrogen-to-nitrogen ratio thereof. The hydrogen can be green hydrogen.

## Description

### Technical Field

The present disclosure relates generally to producing ammonia, and more particularly although not necessarily exclusively, to decarbonizing a process of producing ammonia from a synthesis gas from a hydrocarbon feedstock.

### Background

Ammonia has many uses, including as an agricultural fertilizer, in cleaning products, to purify water, as a refrigerant gas, and in the manufacture of numerous other products such as plastics, explosives, and other chemicals. Ammonia can be produced from a hydrocarbon feedstock such as, for example, natural gas, liquefied petroleum gas, biogas, naphtha or a carbon-rich off gas by generating a synthesis gas and then converting the synthesis gas to ammonia. Synthesis gases and other chemical products such as ammonia, methanol or hydrogen, can be produced via, for example, a steam methane reforming (SMR) process, an autothermal reforming (ATR) process, or partial oxidation (Pox) process. Carbon dioxide may be produced as a byproduct of synthesis gas and ammonia production, such as by combustion of a carbon-based fuel for heating the hydrocarbon feedstock to the temperatures needed to carry out a reforming reaction, or as a side-product in hydrogen production. It is desirable to reduce carbon dioxide emissions associated with producing synthesis gases and related products such as ammonia, methanol and hydrogen.

### Summary

As used below, any reference to a series of examples is to be understood as a reference to each of those examples disjunctively (e.g., "Examples 1-4" or "Examples 1 to 4" is to be understood as "Examples 1, 2, 3, or 4").

Example No. 1 is a method of producing ammonia that includes, at a recuperative reformer, generating a first reformate from a reformer feed comprising a hydrocarbon. The method also includes, at an autothermal reformer, mixing the first reformate with an oxidant and generating a second reformate. The method additionally includes adding hydrogen from an external hydrogen source to a downstream product of the second reformate to generate a conditioned downstream product and, at an ammonia synthesis unit, using the conditioned downstream product to generate ammonia.

Example No. 2 is Example No. 1, wherein the hydrocarbon is preheated to a temperature of between 300 °C to 400 °C and subsequently mixed with steam to produce the reformer feed, and the reformer feed is superheated to a temperature of between 400 °C to 700 °C prior to being introduced to the recuperative reformer.

Example No. 3 is Example No. 2, further comprising passing the reformer feed through a prereformer reactor and converting higher hydrocarbons in the reformer feed to methane prior to superheating the reformer feed and introducing the reformer feed to the recuperative reformer.

Example No. 4 is any one of Example No. 1 to Example No. 3, wherein a temperature of the first reformate at an exit of the recuperative reformer is between 50 °C to 200 °C lower than a temperature of a heated catalyst effluent at an outlet of a catalyst bed located in a catalyst tube of the recuperative reformer, and the temperature of the heated catalyst effluent at the outlet of the catalyst bed is between 700 °C to 950 °C.

Example No. 5 is Example No. 1, wherein adding the oxidant to the autothermal reformer increases a ratio of nitrogen to hydrogen in the autothermal reformer and fuels an exothermal reaction of the first reformate in the autothermal reformer.

Example No. 6 is any one of Example No. 1 to Example No. 5, wherein a portion of a total heat input to a reforming reaction in the recuperative reformer is provided by reaction heat recovered in the recuperative reformer, and another portion of the total heat input to the reforming reaction in the recuperative reformer is provided by a combustion-based heat source.

Example No. 7 is Example No. 6, wherein using the heat recovered in the recuperative reformer as a portion of the heat input to the reforming reaction, in combination with adding hydrogen from an external hydrogen source to the downstream product of the second reformate, reduces carbon dioxide emissions generated during ammonia production in comparison to a case where all of the heat is provided by the combustion-based heat source and no external hydrogen source is utilized.

Example No. 8 is Example No. 1, wherein the hydrogen from the external hydrogen source is generated by electrolyzing water using renewable electrical energy.

Example No. 9 is Example No. 1, wherein the downstream product of the second reformate is generated by converting the second reformate to a mixed synthesis gas by cooling the second reformate, converting carbon monoxide in the second reformate to carbon dioxide using one or more shift reactors, condensing and separating excess steam from the second reformate, and converting the mixed synthesis gas to a raw synthesis gas by capturing at least some carbon dioxide present in the mixed synthesis gas.

Example No. 10 is a system including a recuperative reformer that is operable to generate a first reformate from a reformer feed comprising a hydrocarbon and steam. The system also includes an autothermal reformer that is operable to mix the first reformate with an oxidant to generate a second reformate, and an external hydrogen source for supplying hydrogen that is introducible to a downstream product of the second reformate to generate a conditioned downstream product. The system additionally includes a downstream ammonia synthesis unit that is operable to generate ammonia from the conditioned downstream product. The system optionally includes the external hydrogen source being configured to supply from 10% to 30% of the hydrogen required to produce ammonia from the conditioned downstream product, wherein the downstream product of the second reformate comprises the raw synthesis gas.

Example No. 11 is Example No. 10, wherein the recuperative reformer comprises a radiant section having a catalyst tube at least partially extending through the radiant section and a radiant section heat source that is operable to heat the catalyst tube to cause a reforming reaction by which the reformer feed is converted into the first reformate in the catalyst tube. An annular heat exchanger is located in the catalyst tube.

Example No. 12 is Example No. 11, wherein the annular heat exchanger includes an outer annulus containing a catalyst bed, and the reformer feed is directable through the outer annulus and the catalyst bed where the reformer feed is heatable in part by a primary heat input from the radiant section heat source to convert the reformer feed to the first reformate by a reforming reaction. A heated catalyst effluent discharged from the catalyst bed is subsequently directable through at least one central tube of the annular heat exchanger whereby heat from the first reformate is recoverable and transferrable back to the catalyst bed as a secondary heat input to the reformer feed.

Example No. 13 is Example No. 12, wherein the catalyst bed is a structured catalyst bed.

Example No. 14 is Example No. 10, wherein the hydrogen from the external hydrogen source is green hydrogen obtainable by electrolyzing water using renewable electrical energy.

Example No. 15 is any one of Example No. 10 to Example No. 14, further comprising at least one shift reactor that is operable to generate the downstream product of the second reformate by converting the second reformate to a mixed synthesis gas by cooling the second reformate, converting carbon monoxide in the second reformate to carbon dioxide using one or more shift reactors, condensing and separating excess steam from the second reformate, and converting the mixed synthesis gas to a raw synthesis gas by capturing at least some carbon dioxide present in the mixed synthesis gas.

Example No. 16 is a method of retrofitting an existing ammonia production system having a primary reformer that generates a first reformate from a reformer feed comprising a hydrocarbon, and a secondary reformer that generates a second reformate by mixing the first reformate with an oxidant. The method includes installing an annular heat exchanger in a catalyst tube at least partially extending through a radiant section of the primary reformer, and at a location downstream of the secondary reformer, and downstream of a cooling and shift unit and a carbon capture unit that are collectively used to convert the second reformate to a cooled raw synthesis gas. The method also includes fluidly connecting a pathway for carrying the raw synthesis gas to an external hydrogen source and introducing hydrogen into the pathway.

Example No. 17 is Example No. 16, wherein the annular heat exchanger includes an outer annulus containing a structured catalyst bed through which the reformer feed is directed and heated in part by a primary heat input from a radiant section heat source and wherein the reformer feed is converted to the first reformate by a reforming reaction. The annular heat exchanger also includes at least one central tube through which a heated catalyst effluent discharged from the catalyst bed is subsequently directed and wherein heat from the first reformate is recovered and transferred back to the catalyst bed as a secondary heat input to the reforming reaction.

Example No. 18 is Example No. 16 or Example No. 17, wherein the location at which the annular heat exchanger is installed is a conditioning section of the ammonia production system in which the raw synthesis gas is subjected to methanation of remaining carbon oxides in the raw synthesis gas.

Example No. 19 is Example No. 16, wherein the external hydrogen source is a green hydrogen source.

Example No. 20 is Example No. 19, wherein the green hydrogen source is a water electrolyzer powered by renewable electrical energy.

Example No. 21 is any of Example No. 1 to Example No. 15, wherein the downstream product of the second reformate is generated by: converting the second reformate to a mixed synthesis gas by cooling the second reformate, converting carbon monoxide in the second reformate to carbon dioxide using one or more shift reactors, and condensing and separating excess steam from the second reformate; and converting the mixed synthesis gas to a raw synthesis gas by capturing at least some carbon dioxide present in the mixed synthesis gas; wherein the downstream product of the second reformate comprises the raw synthesis gas, and wherein the external hydrogen added to the raw synthesis gas is from 10% to 30% of the hydrogen required to produce ammonia from the conditioned downstream product.

Example No. 22 is Example No. 21, wherein the external hydrogen added to the raw synthesis gas is from 20% to 30% of the hydrogen required to produce ammonia from the conditioned downstream product.

Example No. 23 is Example No. 22, wherein the external hydrogen added to the raw synthesis gas is from 25% to 30% of the hydrogen required to produce ammonia from the conditioned downstream product.

### Brief Description of the Drawings

FIG. 1 is a block diagram of an ammonia production system according to one example configuration.
FIG. 2 is a schematic representation of a recuperative heat exchanger that is locatable in a catalyst tube of a primary reformer of an ammonia production system according to one example.
FIG. 3 is a schematic representation of another recuperative heat exchanger that is locatable in a catalyst tube of a primary reformer of an ammonia production system according to another example.
FIG. 4 is a table showing various performance data for an ammonia production system according to one example configuration.
FIG. 5 is a flowchart describing one example of a method of producing ammonia.

### Detailed Description

Certain aspects and examples of the present disclosure relate to a method for decarbonizing ammonia production by a system that generates a synthesis gas from a hydrocarbon feedstock and subsequently produces ammonia from the synthesis gas. The method includes the use of a primary reformer for generating a first reformate from a reformer feed comprising a hydrocarbon by way of a reforming reaction, and a downstream secondary reformer (also referred to as an autothermal reformer when used in ammonia production) for receiving the first reformate and generating therefrom a second reformate that can be further processed into a downstream product for synthesizing into ammonia. In some examples, the primary reformer may be a recuperative reformer, such as a steam reformer. When the primary reformer is a recuperative reformer, heat is recovered inside the catalyst tubes of the primary reformer, such as by exchanging the heat of a hot catalyst effluent with a catalyst bed so that the catalyst effluent exits the (recuperative) primary reformer at a temperature that is reduced in comparison to a catalyst outlet temperature within the reactor. The secondary reformer may receive, in addition to the first reformate, an oxygen and nitrogen rich stream such as air.

The method further includes reducing carbon dioxide generation by a combustion-based heat source used to generate heat for the reforming reaction. For example, the sensible heat from a hot catalyst outlet of the primary reformer can be recovered and at least a part of the recovered heat can be returned to the reforming reaction to form a primary reformer effluent of a lower temperature. This can reduce the heat load (duty) on the combustion-based heat source, which can result in less required firing of the combustion-based heat source and reduced carbon dioxide emissions therefrom for a given ammonia production capacity.

Utilizing heat recovered in the primary reformer to provide part of the reaction heat for the reforming reaction can result in a lower temperature of the first reformate at an outlet of the primary reformer and an inlet of the secondary reformer than would otherwise be the case if all the heat required by the reforming reaction was provided by the combustion-based heat source. The lower temperature of the first reformate can allow a greater amount of an oxidant to be introduced into the secondary reformer without exceeding a temperature limit therein than would otherwise be possible if heat recovery in the primary reformer was not employed and the temperature of the first reformate at the inlet of the secondary reformer was resultantly higher. The mixing of a greater amount of the oxidant into the first reformate in the secondary reformer can result in the second reformate having a higher nitrogen concentration, a lesser hydrogen concentration, and a greater nitrogen-to-hydrogen ratio than would otherwise be present without the use of heat recovery in the primary reformer.

To account for the lesser hydrogen concentration, additional hydrogen can be added to a downstream product of the second reformate prior to transfer of the downstream product to an ammonia synthesis unit for generating ammonia from the downstream product. The hydrogen may be provided from an external hydrogen source rather than producing the hydrogen as part of the synthesis gas or ammonia generation operation. Preferably, the hydrogen is green hydrogen that is generated using renewable energy. For example, the hydrogen may be generated by electrolyzing water using an electrolyzer unit powered by renewable (e.g., solar-generated or wind turbine-generated) electrical energy. This can further help to reduce a carbon footprint of the ammonia generating operation.

In some examples, sensible heat can be recovered form the catalyst outlet of the primary reformer using a recuperative heat exchanger(s) located in a catalyst tube(s) of a radiant section of the primary reformer. In one example, the recuperative heat exchanger may be an annular heat exchanger having an outer annulus surrounding a central tube. The outer annulus may contain a catalyst bed wherein the reforming reaction of the reformer feed to the first reformate can take place. The catalyst bed can be heated by the combustion-based heat source and also by the heat recovered from the primary reformer catalyst outlet. A heated catalyst effluent can exit the outer annulus of the annular heat exchanger and can thereafter pass through the central tube to recover heat from the heated catalyst effluent. In some examples, the heated catalyst effluent can pass through the central tube in a direction that is counter-current to the direction in which the first reformate passes through the outer annulus. At least some of this recovered heat can be returned to the catalyst bed in the outer annulus and the reforming reaction that takes place therein. In another example, an inner annulus may be interposed between the central tube and the outer annulus containing the catalyst bed. In this example, the heated catalyst effluent can flow through the inner annulus in a direction that is counter-current to the direction in which the first reformate passes through the outer annulus and then through the central tube in a direction that is concurrent with the direction in which the first reformate passes through the outer annulus. At least some of this recovered heat can again be returned to the catalyst bed in the outer annulus and the reforming reaction that takes place therein.

In some examples, a cooling and shift unit may reside downstream of the autothermal reformer. The cooling and shift unit may be used to generate the downstream product of the second reformate by first cooling the second reformate. The cooling and shift unit may include one or more shift reactors that can subsequently convert carbon monoxide (and steam) in the second reformate to carbon dioxide and hydrogen via a water gas shift reaction, and can also condense and separate excess steam from the second reformate, to produce a mixed synthesis gas. The shift reactors or another component of the cooling and shift unit can also convert the mixed synthesis gas to a raw synthesis gas by removing carbon dioxide from the mixed synthesis gas. One or more types of carbon capture technology may be used for this purpose. For example, one or some combination of amine-based adsorption, pressure swing adsorption, vacuum adsorption, cryogenic, or membrane-based carbon capture technologies may be utilized. The raw synthesis gas may be transferred to the ammonia synthesis unit to generate ammonia from the raw synthesis gas. As described in more detail below, other processing or conditioning steps may also be performed on the second reformate or a product of the second reformate prior to the use thereof to generate ammonia. For example, additional hydrogen may be added to the raw synthesis gas, specifically 10%-30%, optionally 20%-30% or 25%-30% of the hydrogen required to produce ammonia from the raw synthesis gas can be provided from an external source. The percentage refers to the proportion of hydrogen atoms in the ammonia product that originate from the external hydrogen source. In some examples, adding the external hydrogen to the raw synthesis gas forms a conditioned synthesis gas stream. This has the advantage of providing methods and/or systems wherein a significant portion of the hydrogen which forms the final ammonia product can be derived from less carbon intensive sources (for example, hydrogen obtained by electrolysis).

Illustrative examples follow and are given to introduce the reader to the general subject matter discussed herein rather than to limit the scope of the disclosed concepts. The following sections describe various additional features and examples with reference to the drawings in which like numerals indicate like elements, and directional descriptions are used to describe the illustrative aspects, but, like the illustrative aspects, should not be used to limit the present disclosure.

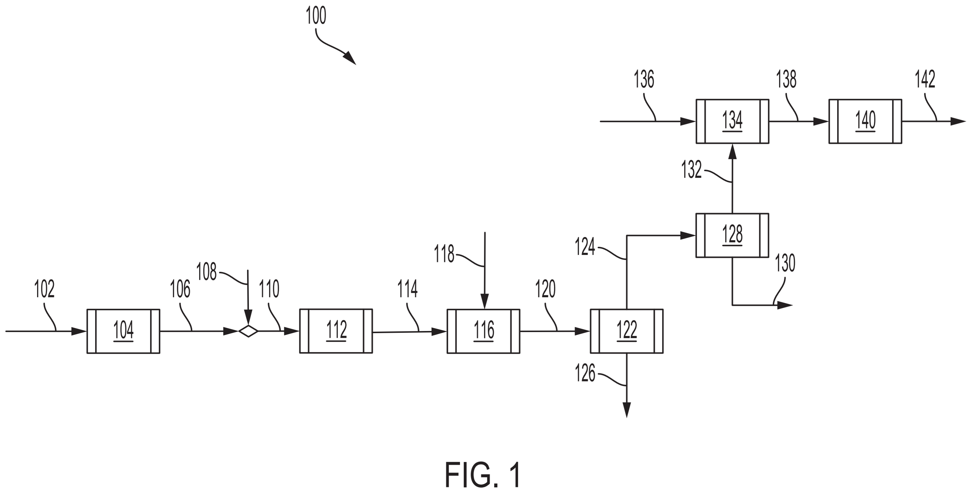

FIG. 1 is a block diagram of an ammonia generating system 100 according to one example configuration. As shown, a hydrocarbon feed 102 may initially be preheated and pretreated in a preheating and pretreatment unit 104 to prepare the hydrocarbon feed 102 for a reforming process. In some examples, the hydrocarbon feed may comprise natural gas, biogas, liquefied petroleum gas, naphtha, or carbon-rich off gas. A preheating operation may include, for example, preheating the hydrocarbon feed 102 to a temperature between 300 °C to 400 °C. A pretreatment operation may include, for example, one or more of hydrogenation, desulfurization, and dechlorination of the hydrocarbon feed 102, but is not limited to these pretreatments. Halides may also be removed from the hydrocarbon feed 102 during pretreatment.

The preheated and pretreated hydrocarbon feed 106 may then be mixed with steam 108 to generate a reformer feed 110, and the reformer feed 110 can be superheated to a required temperature for a reforming reaction in a primary reformer 112 of the system 100. In some examples, the reformer feed 110 can be superheated to a temperature between 400 °C to 700 °C. In some examples, the reformer feed 110 may be passed through a prereformer prior to being introduced to the primary reformer 112. In the prereformer, a preliminary reforming reaction can take place and higher hydrocarbons in the reformer feed 110 can be converted into methane before being superheated and fed to the primary reformer 112.

In this example, the primary reformer 112 is a recuperative reformer and will be hereafter referred to as such. The recuperative reformer 112 may, in some examples, be a combustion-based (fired) reformer. The recuperative reformer 112 may include a radiant section having one or more radiant section heat sources (e.g., burners) that generate heat and direct the generated heat at one or more catalyst tubes that at least partially extend through the radiant section. In some examples, the heat for the primary reformer (recuperative reformer) is supplied through a combustion reaction between a fuel stream and an air stream, wherein the air stream is not an oxygen-enriched stream. An oxygen enriched stream is one which is based upon atmospheric air and has had additional oxygen added. The oxygen content may therefore be above around 20% to 25% oxygen by volume. An air stream which is not oxygen-enriched has had no additional oxygen added to it. Such a stream therefore may contain less than around 25% oxygen by volume. This provides for a simplified drop-in method/system, which can be more easily and economically added to, integrated with, or installed in existing ammonia product plants which do not operate with oxygen-enriched air streams for providing heat for the primary reformer, for example. The reactor feed 110 may undergo a reforming reaction within the catalyst tubes via contact with a catalyst located therein, which converts the reformer feed 110 into a first reformate 114 that may comprise synthesis gas and other byproducts of the reforming reaction (i.e., a mixed synthesis gas). The reforming reaction in the recuperative reformer 112 may occur at a temperature between, for example, 700 °C to 900 °C.

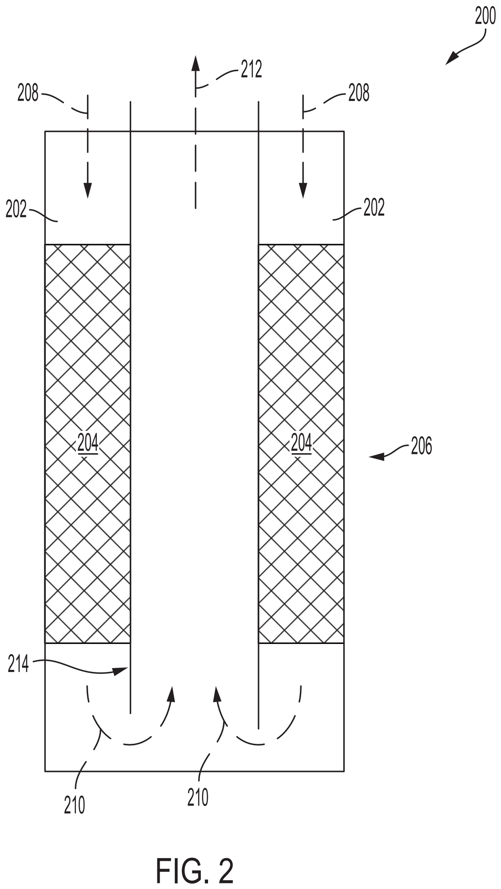

A heat recovery mechanism can be located in the catalyst tubes. In some examples, the heat recovery mechanism may be recuperative heat exchanger. As described in more detail below relative to FIGS. 2-3, the recuperative heat exchanger may be an annular heat exchanger that includes an outer annulus containing a catalyst bed that can be heated by the radiant section heat source, and wherein the reforming reaction conversion of the reformer feed 110 to the first reformate 114 can take place. The catalyst of the catalyst bed may be a structured catalyst (for example a metal structure with a catalyst coated on the structure). The structured catalyst may enable a reduced pressure drop and an increased surface area in comparison to a traditional pellet catalyst. The increased surface area may help to compensate for a reduced catalyst area associated with location of the catalyst bed in the outer annulus of the annular heat exchanger.

The annular heat exchanger may also include a central tube that is surrounded by the outer annulus and through which a heated catalyst effluent can be passed after leaving the outer annulus to recover heat from the catalyst effluent and to thereafter return at least some of the recovered heat to the catalyst bed and the reforming reaction that takes place therein. In another example, and as also described in more detail below, the annular heat exchanger may include an inner annulus that is interposed between the outer annulus and the central tube. In either case, heat recovery in the annular heat exchanger can reduce the heat load (duty) on the radiant section heat source of the recuperative reformer 112 and can correspondingly reduce carbon dioxide emissions associated with firing of the radiant section heat source when the radiant section heat source is a combustion-based heat source. In some examples, the first reformate 114 may exit the recuperative reformer 112 at a temperature that is 50 °C to 200 °C lower than a temperature at which the catalyst effluent leaves the catalyst bed of the heat exchanger (i.e., the catalyst outlet temperature). Such a recuperative reformer 112 catalyst tube outlet temperature is also 50 °C to 200 °C lower than a catalyst outlet temperature associated with a primary reformer of a typical process for generating ammonia from synthesis gas. For example, the temperature of the catalyst effluent as it exits the catalyst bed may be 700 °C to 950 °C, while the catalyst tube outlet temperature (i.e., the first reformate 114 temperature) may be 600 °C to 800 °C.

The first reformate 114 is discharged from the recuperative reformer 112 at a reduced temperature in comparison to traditional primary reformers. After discharge from the recuperative reformer, the first reformate 114 can be introduced into a secondary (autothermal) reformer 116. In the autothermal reformer 116, the first reformate 114 can be mixed with an oxidant 118 in a burner zone, after which hydrocarbons such as methane that remain in the first reformate 114 can be partially oxidated (e.g., through stoichiometric combustion) to produce carbon monoxide and hydrogen. The oxidant 118 can comprise an oxygen-rich gas stream, such as enriched air or, in some examples, air. The oxidant 118 can also contain the nitrogen necessary for the production of ammonia from syngas. In some examples, the oxidant 118 can be compressed prior to introduction to the autothermal reformer 116. The oxidant 118 may also be preheated to a suitable temperature, which is preferably less than 900 °C in at least some examples. After reaction in the burner zone, the first reformate 114 can also pass through a catalyst bed in the autothermal reformer 116 to form a second reformate 120. The autothermal reformer 116 has an upper temperature limit. Given that the reaction of the first reformate 114 with the oxidant 118 in the autothermal reformer 116 is highly exothermic, the total amount of oxygen that be introduced into the autothermal reformer 116 and can take part in the reaction can be limited to an amount that will not cause the temperature of the second reformate 120 to exceed the upper temperature limit of the autothermal reformer 116.

In one example, an outlet temperature of the autothermal reformer 116 may be maintained at a temperature of between 900 °C and 1,100 °C. Since the temperature of the first reformate 114 at the exit of the recuperative reformer 112 is lower than it is in a typical process for producing ammonia from synthesis gas, so is the temperature of the first reformate 114 when introduced into the autothermal reformer 116. This can allow more oxidant 118 to be introduced into the autothermal reformer 116 without exceeding any autothermal reformer outlet temperature limitations. A minimum autothermal reformer temperature may also be maintained to ensure auto-ignition of the gas therein. The increased flowrate of the oxidant 118 can increase the concentration of nitrogen within the autothermal reformer, which can result in the second reformate 120 having a lower hydrogen-to-nitrogen ratio than is traditionally present in ammonia production operations.

The second reformate 120 is discharged from the autothermal reformer 116 and may be thereafter subjected to various downstream treatment operations to eventually produce a downstream product of the second reformate 120. For example, the second reformate 120 may be introduced to a cooling and shift unit 122 where the second reformate 120 can be cooled for downstream ammonia synthesis. For example, a high temperature shift reaction step may be used to convert at least part of the carbon monoxide present in the syngas to carbon dioxide and water via an exothermic water gas shift reaction. The second reformate 120 may thereafter be cooled from a temperature of, for example, between 300 °C to 400 °C, to a temperature of between 180 °C to 230 °C, before passing through a low-temperature shift reaction step that converts more carbon monoxide into hydrogen. In some examples, further cooling may thereafter be applied to lower the temperature of the second reformate 120 to between 40 °C to 60 °C.

A majority of the carbon monoxide in the second reformate 120 can be converted to carbon dioxide by the shift reactor(s) to form a mixed synthesis gas 124 rich in carbon dioxide. Excess steam can also be condensed and separated from the mixed synthesis gas 124 by the cooling and shift unit 122. The cooling duty of the cooling and shift unit 122 may, in some examples, be recovered and used, for example, to preheat a hydrocarbon feed or a reformer feed, to heat boiler feed water or demineralized water, to heat reboilers, to generate steam, etc. The condensate 126 associated with removal of the excess steam can be utilized, for example, to generate at least a portion of the steam used in the steam reforming process and the water-shift reaction, or to drive downstream compressors.

The mixed synthesis gas 124 can be introduced to a carbon capture unit 128. The carbon capture unit 128 can operate using one of various possible techniques for removing carbon dioxide from synthesis gas. For example, the carbon capture unit 128 may utilize (e.g., amine-based) adsorption processes, cryogenic separation, or membrane or pressure or vacuum swing adsorption. Carbon dioxide 130 captured by the carbon capture unit 128 may be sent to another location for further utilization or storage. For example, captured carbon dioxide may be used in the production of ureum.

Removal of carbon dioxide from the mixed synthesis gas 124 yields raw synthesis gas 132. The raw synthesis gas contains mostly nitrogen and hydrogen, but may also contain some amount of unconverted carbon monoxide and methane, or inert gases such as Argon. The raw synthesis gas may be introduced to a conditioning section 134 of the system 100, where the raw synthesis gas 132 can be further treated to ensure the raw synthesis gas 132 is of a desired quality. For example, the raw synthesis gas 132 may be subjected to methanation of remaining carbon oxides in the conditioning section 134.

In some examples, the raw synthesis gas 132 (i.e., the aforementioned downstream product of the second reformate 120) may have a nitrogen-to hydrogen ratio that is higher than optimal for generation of ammonia from the raw synthesis gas 132 in a downstream ammonia synthesis unit 140. To decrease the nitrogen-to hydrogen ratio, additional hydrogen 136 can be added to the raw synthesis gas 132 in the conditioning section 134 or otherwise upstream of the ammonia synthesis unit 140 to generate a conditioned synthesis gas 138 (a conditioned downstream product).

The hydrogen 136 may be provided from virtually any external hydrogen-rich source. In some implementations, the hydrogen 136 is green hydrogen that is generated using renewable energy. For example, the hydrogen 136 may be generated by electrolyzing water using an electrolyzer unit powered by renewable (e.g., solar-generated, hydro-generated, tidal-generated, or wind turbine-generated) electrical energy. In such implementations, this can further help to reduce a carbon footprint of the ammonia generating operation.

The conditioned synthesis gas 138 may then be sent to the ammonia synthesis unit 140 to produce ammonia. The ammonia synthesis unit 140 can employ any known synthesis technology, such as but not limited to, a Haber Bosch process that utilizes compression, an ammonia reactor, and separation, and may include unconverted synthesis gas recycling operations and/or heat recovery operations. In an alternative example where the hydrogen 136 is available at high pressure, the addition of the hydrogen 136 to the raw synthesis gas 132 may be performed after compression by the conditioning section 134 of the synthesis gas to a required pressure for ammonia synthesis in the ammonia synthesis unit 140. Ammonia 142 generated by the ammonia synthesis unit 140 may be discharged to a downstream location for storage or use.

The heat recovery capability of the recuperative reformer 112 can maintain or increase throughput in comparison to a traditional primary reformer that lacks heat recovery functionality, while simultaneously reducing the amount of firing and associated carbon dioxide emissions of the radiant section heat source when the radiant section heat source is a combustion-based heat source. It has been determined that the heat recovery inside the catalyst tubes of the radiant section of the recuperative reformer 112 can reduce the amount of required external heat input to the recuperative reformer 112 by up to 30% in comparison to a typical ammonia generation process that lacks recuperative reformer heat recovery functionality, and that required firing and carbon dioxide emissions of a combustion-based radiant section heat source can be commensurately reduced. For example, it has been determined that the combined effect of a lower heat load on a combustion-based radiant section heat source and the utilization of recuperative reformer heat recovery can reduce direct carbon emissions associated with the recuperative reformer 112 by more than 20%. In addition to reducing the direct emissions from the recuperative reformer 112, it may also be possible in the case of the system 100 to reduce a flow rate of the hydrocarbon feed and thus also reduce the amount of carbon dioxide entrained in the process gas (and captured in the carbon capture unit). Consequently, the total amount of carbon dioxide produced in an ammonia generating process may be reduced by more than 22% in comparison to a similar ammonia generating process that does not include heat recovery by a recuperative reformer. Additional carbon dioxide reductions from the combustion side of the recuperative reformer 112 may also be realized by utilizing hydrogen or hydrogen rich fuels. It has been further determined that the use of a structured catalyst in the heat exchanger of the recuperative reformer 112 can minimize a pressure drop in the recuperative reformer 112 and does not result in hydraulic limitation in the recuperative reformer 112.

FIG. 2 is a schematic representation of one example of a recuperative heat exchanger 200 that is installable in a catalyst tube of a primary reformer of an ammonia generating system to produce a recuperative reformer, such as the recuperative reformer 112 of the ammonia generation system 100 FIG. 1. In the example of FIG. 2, the recuperative heat exchanger 200 is an annular heat exchanger having an outer annulus 202 containing a catalyst bed 204. The catalyst bed 204 can be heated, for example, at least by a radiant section heat source of the radiant section 206 of the recuperative reformer, which directs heat to the catalyst tube. The radiant section heat source may be a combustion-based heat source in some examples. The heat can drive a reforming reaction of a reformer feed 208 as it passes through the catalyst bed 204. A heated catalyst effluent 210 exits the catalyst bed 204 as a result of the reforming reaction of the reformer feed 208, and eventually exits the recuperative heat exchanger 200 as a first reformate 212.

As shown, the recuperative heat exchanger 200 may also include a central tube 214. The heated catalyst effluent 210 can pass through the central tube 214 after leaving the catalyst bed 204 to recover heat from the heated catalyst effluent 210. At least some of the recovered heat can be returned to the catalyst bed 204 and the reforming reaction that takes place therein. In this example, the flow of the heated catalyst effluent 210 through the central tube 214 is counter-current to the flow of the reformer feed 208 through the outer annulus 202 and the catalyst bed 204. As such, the reformer feed 208 in this example enters the recuperative heat exchanger 200 and the first reformate 214 exits the recuperative heat exchanger 200 at a same side thereof.

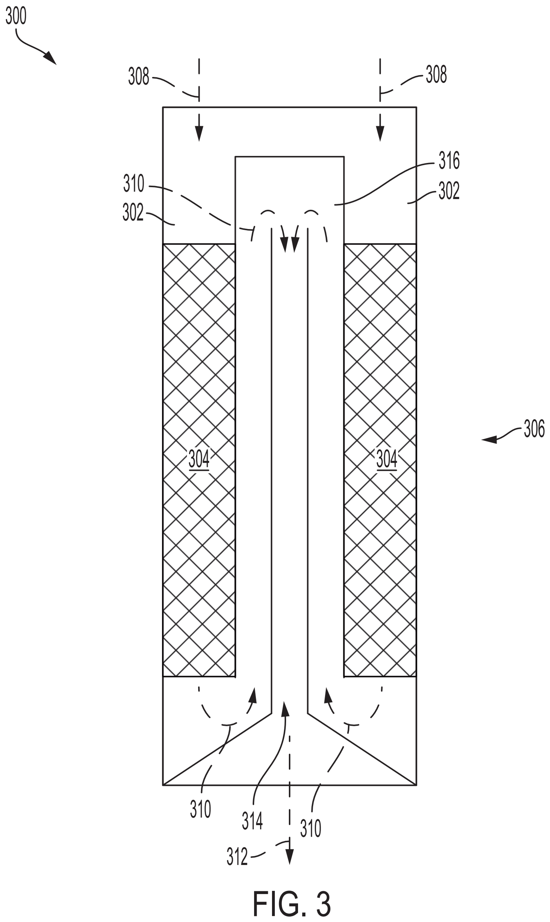

FIG. 3 is a schematic representation of another example of a recuperative heat exchanger 300 that is installable in a catalyst tube of a primary reformer of an ammonia generating system to produce a recuperative reformer, such as the recuperative reformer 112 of the ammonia generation system 100 FIG. 1. In the example of FIG. 3, the recuperative heat exchanger 300 is an annular heat exchanger having an outer annulus 302 containing a catalyst bed 304. The catalyst bed 304 can be heated, for example, at least by a radiant section heat source of the radiant section 306 of the recuperative reformer, which directs heat to the catalyst tube. The radiant section heat source may be a combustion-based heat source in some examples. The heat can drive a reforming reaction of a reformer feed 308 as it passes through the catalyst bed 304. A heated catalyst effluent 310 exits the catalyst bed 304 as a result of the reforming reaction of the reformer feed 308, and eventually exits the recuperative heat exchanger 300 as a first reformate 312.

As shown, the recuperative heat exchanger 300 in this example may also include a central tube 314 that can be concentrically located within the outer annulus 302, and an inner annulus 316 that may be interposed between the central tube 314 and the outer annulus 302. After exiting the catalyst bed 304, the heated catalyst effluent 310 may first pass through the inner annulus 316 and then through the central tube 314, before exiting the recuperative heat exchanger 300 as the first reformate 312. More particularly, in the recuperative heat exchanger 300 implementation of FIG. 3, the flow of the heated catalyst effluent 310 through the inner annulus 316 may be counter-current to the flow of the reformer feed 308 through the outer annulus 302 and the catalyst bed 304, while the flow of the heated catalyst effluent 310 through the central tube 314 may be concurrent with the flow of the reformer feed 308 through the outer annulus 302 and the catalyst bed 304. The passage of the heated catalyst effluent 310 through the inner annulus 316 and the central tube 314 can again allow at least some of the heat from the heated catalyst effluent 310 to be recovered and returned to the catalyst bed 304 and the reforming reaction that takes place therein. In this example, the presence of the inner annulus 316 in conjunction with the central tube 314 also allows the reformer feed 308 to enter the recuperative heat exchanger 300 at a first side thereof and the first reformate 312 to exit the recuperative heat exchanger 300 at a second, opposite, side thereof. This arrangement can facilitate retrofitting of the recuperative heat exchanger 300 into catalyst tubes of existing primary reformers by matching the normal flow path of a reformer feed and heated catalyst effluent through the catalyst tubes.

The temperature of the reformer feed 208, 308 at entry into the recuperative heat exchanger 200, 300 may be between, for example, 300 °C to 700 °C. The temperature of the heated catalyst effluent 210, 310 at the exit of the catalyst bed 204, 304 may be between, for example, 700 °C to 950 °C. Return of heat recovered from the heated catalyst effluent 210, 310 back to the catalyst bed 204, 304 can result in a first reformate 212, 312 temperature at exit from the recuperative heat exchanger 200, 300 that is lower than it would be if no heat was recovered from the heated catalyst effluent 210, 310. Nonetheless, the temperature of the first reformate 210, 310 at the respective exit of the associated recuperative heat exchanger 200, 300 may still be above the temperature of the reformer feed 208, 308 at the inlet of the recuperative heat exchanger 200, 300. For example, the temperature of the first reformate 210, 310 at the exit of the recuperative heat exchanger 200, 300 may be between 500 °C to 800 °C.

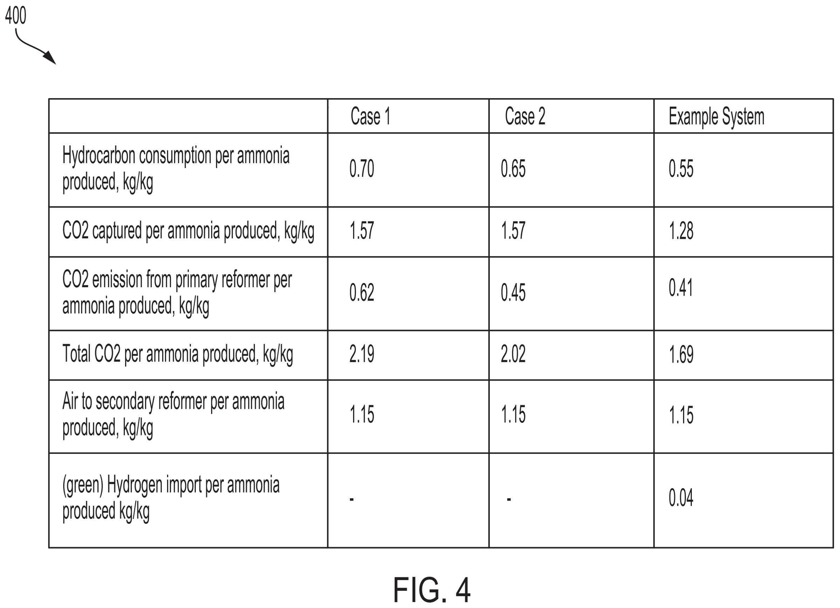

FIG. 4 is a table providing various performance data for several ammonia production systems when operated under like conditions (e.g., using the same feedstock quality and utilities, and generating an ammonia product of the same quality and quantity. In the table, "Case 1" represents one known ammonia production system, "Case 2" represents another known ammonia production system, and "Example System" represents the ammonia production system 100 of FIG. 1. As may be observed in the table, in comparison to the known ammonia production systems, the ammonia production system 100 of FIG. 1 consumes less hydrocarbon per amount of ammonia produced, emits less carbon dioxide from its primary (recuperative) reformer 104 per amount of ammonia produced, and generates less total carbon dioxide per amount of ammonia produced. The ammonia production system 100 of FIG. 1 also provides the same amount of airflow to its secondary (autothermal) reformer as the known ammonia production systems and thus a higher air flow per syngas feed rate, which results in higher nitrogen-to-hydrogen ratio in the autothermal reformer. While the table indicates that the amount of carbon dioxide captured by the ammonia production system 100 of FIG. 1 per amount of ammonia produced is lower than the known systems, this is only because the ammonia production system 100 of FIG. 1 requires less hydrocarbon input per amount of ammonia produced than the known systems, and is not an indicator of lesser performance.

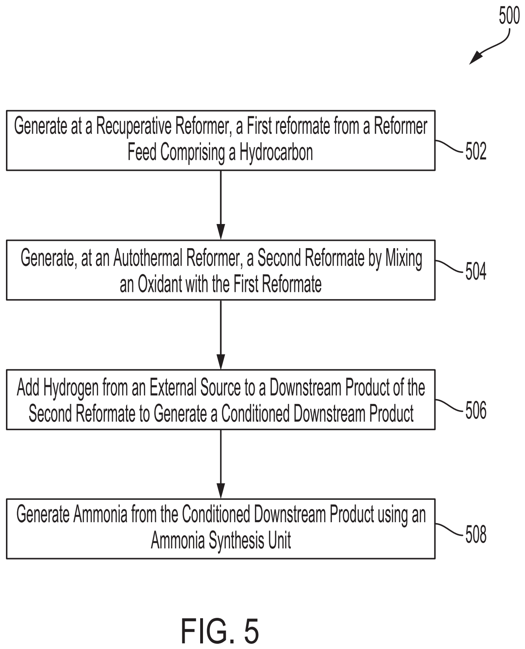

FIG. 5 is a flowchart describing one example of a method 500 of producing ammonia from a hydrocarbon feed. As indicated in block 502, a recuperative reformer may be used to generate a first reformate from a reformer feed comprising a hydrocarbon. In some examples, the hydrocarbon may be natural gas, biogas, liquefied petroleum gas, naphtha, or carbon-rich off gas. The recuperative reformer may include heat recovery functionality by which heat of a reforming reaction can be recovered from the first reformate and at least part of the recovered heat can be returned to the reforming reaction. The heat recovery functionality may be provided by a heat exchanger that can be located in the catalyst tubes of a radiant section of the recuperative reformer. In some examples, the heat exchanger may be an annular heat exchanger having an outer annulus containing a catalyst bed within which the reforming reaction can take place, and at least one central tube where catalyst effluent heat recovery can take place.

As indicated in block 504, an autothermal reformer may subsequently receive the first reformate and mix the first reformate with an oxidant to generate a second reformate. The first reformate may undergo stoichiometric combustion in the autothermal reformer. In some examples, the oxidant may be air. The second reformate may be subjected to various downstream treatment operations after being discharged from the autothermal reformer. For example, the second reformate may be sent to a cooling and shift unit where the second reformate can be cooled and also converted into a mixed synthesis gas by subjecting the second reformate to a water-shift operation where carbon monoxide in the second reformate is converted to carbon dioxide and hydrogen. The carbon dioxide can thereafter be removed from the mixed synthesis gas, such as by a carbon capture unit, to generate a downstream product of the second reformate in the form of a raw synthesis gas.

As indicated in block 506, hydrogen from an external hydrogen source may be added to a downstream product (raw synthesis gas) of the second reformate to generate a conditioned downstream product. The hydrogen may be green hydrogen. For example, the hydrogen can be generated by electrolyzing water using renewable electrical energy.

As indicated in block 508, ammonia may be generated from the conditioned downstream product by an ammonia synthesis unit. The generated ammonia can be separated and sent to another location for storage or for use.

In some system and method examples, from 10% to 30% of the hydrogen required to produce ammonia from a synthesis gas generated via a reforming reaction of a hydrocarbon can be externally supplied. In some system and method examples, from 20% to 30% of the hydrogen required to produce ammonia from a synthesis gas generated via a reforming reaction of a hydrocarbon (for example, a raw synthesis gas mixture) can be externally supplied, optionally wherein from 25% to 30% of the hydrogen required is provided from an external hydrogen source. The percentage refers to the proportion of hydrogen atoms in the ammonia product that originate from the external hydrogen source. Supplying this hydrogen as green hydrogen, such as hydrogen produced by electrolyzing water using energy from a renewable energy source, may further reduce the carbon footprint associated with the ammonia production system. Further, using hydrogen from an external source as part of the hydrogen required by the system can result in extra ammonia production system capacity. This extra ammonia production system capacity can be applied to reduce the size of a synthesis gas generation section of the system by from 10% to 30%, from 20% to 30%, or from 25% to 30%. The synthesis gas generation section of an ammonia production system can also be over- designed to accommodate periods where additional hydrogen is not available.

The heat recovery functionality of the recuperative reformer in the examples presented herein may be built into a new system, but can also be retrofit to an existing system. For example, example recuperative heat exchangers described herein for recovering heat from a reforming reaction in a recuperative reformer can be installed into the catalyst tubes of an existing primary reformer without a need for other modifications. Likewise, the external hydrogen added to the downstream product of the second reformate can be applied easily to an existing ammonia production system. Thus, retrofitting a primary reformer to include heat recovery and adding green hydrogen from an external source to the reformate stream can be a very effective method of decarbonizing an existing ammonia production system.

It is also noted that when including heat recovery functionality in a new recuperative reformer or when adding heat recovery functionality to an existing primary reformer, the load on the primary reformer can be reduced without affecting the air flowrate to a downstream secondary (e.g., autothermal) reformer. This can ensure that methane slip from the reforming section of an ammonia production system is the same or even lower than for other alternatives. The introduction of additional hydrogen from an external hydrogen source into the reformate stream as described herein is not associated with a methane slip and thus an amount of inert substances present in the ammonia generating section (e.g., ammonia synthesis unit) can be resultantly reduced and a lower purge rate may be required. This can further increase the efficiency of the ammonia loop. The introduction of additional hydrogen from an external source into the reformate stream can also be applied to increase the capacity of an existing ammonia production system.

In another example, an ammonia production system according to examples of the disclosure can be designed to account for possible intermittent unavailability of the renewable energy used to generate green hydrogen, and thus a corresponding unavailability of green hydrogen. For example, when no renewable electrical energy is available to generate green hydrogen by a water electrolyzer that is used to provide hydrogen to an ammonia production system, a slightly greater amount of oxygen (e.g., from the electrolyzer) can be introduced into the oxidant (e.g., air) supplied to the secondary reformer to form an enriched oxidant stream. The higher oxygen concentration in the enriched oxidant stream can result in a larger exothermic reaction in the secondary reformer and can, therefore, allow target outlet conditions of the secondary reformer to still be maintained. Such a method can also ensure that a desired nitrogen-to-hydrogen ratio of the downstream product of the secondary reformate (e.g., raw synthesis gas) at an inlet of the ammonia synthesis unit can remain constant even if no additional external hydrogen can be blended into the reformate stream. An ammonia production system according to the disclosure can thus have the flexibility to operate as normal when no externally-sourced green hydrogen is available, without requiring the system to store hydrogen or rely on batteries or another non-renewable energy source to power a green hydrogen generation process. Alternatively, a similar flexibility of operation may be achieved by increasing the feed of hydrocarbon feedstock to the recuperative reformer. Doing so may produce more hydrogen and thus a higher hydrogen-to-nitrogen ratio, and may eliminate the need to add more hydrogen to the reformate stream.

While the examples provided herein are directed specifically to an ammonia production system and process, it should be understood that it is also possible to utilize recuperative reformer heat recovery functionality and to add external (green) hydrogen to a reformate stream in hybrid systems. For example, such techniques can also be used in a system where only part of generated synthesis gas is utilized for ammonia production and the remaining synthesis gas is utilized to produce methanol or hydrogen.

The foregoing description of certain examples, including illustrated examples, has been presented only for the purpose of illustration and description and is not intended to be exhaustive or to limit the disclosure to the precise forms disclosed. Numerous modifications, adaptations, and uses thereof will be apparent to those skilled in the art without departing from the scope of the disclosure.

## Claims

1. A method of producing ammonia comprising:
at a recuperative reformer, generating a first reformate from a reformer feed comprising a hydrocarbon;
at an autothermal reformer, mixing the first reformate with an oxidant and generating a second reformate;
adding hydrogen from an external hydrogen source to a downstream product of the second reformate to generate a conditioned downstream product; and
at an ammonia synthesis unit, using the conditioned downstream product to generate ammonia.

2. The method of claim 1, wherein:
the hydrocarbon is preheated to a temperature of between 300 °C to 400 °C and subsequently mixed with steam to produce the reformer feed; and
the reformer feed is superheated to a temperature of between 400 °C to 700 °C prior to being introduced to the recuperative reformer.

3. The method of claim 2, further comprising passing the reformer feed through a prereformer reactor and converting higher hydrocarbons in the reformer feed to methane prior to superheating the reformer feed and introducing the reformer feed to the recuperative reformer.

4. The method of claim 1, wherein a temperature of the first reformate at an exit of the recuperative reformer is between 50 °C to 200 °C lower than a temperature of a heated catalyst effluent at an outlet of a catalyst bed located in a catalyst tube of the recuperative reformer, and the temperature of the heated catalyst effluent at the outlet of the catalyst bed is between 700 °C to 950 °C.

5. The method of claim 1, wherein adding the oxidant to the autothermal reformer increases a ratio of nitrogen to hydrogen in the autothermal reformer and fuels an exothermal reaction of the first reformate in the autothermal reformer; or
wherein the hydrogen from the external hydrogen source is generated by electrolyzing water using renewable electrical energy.

6. The method of claim 1, wherein:
a portion of a total heat input to a reforming reaction in the recuperative reformer is provided by reaction heat recovered in the recuperative reformer; and
another portion of the total heat input to the reforming reaction in the recuperative reformer is provided by a combustion-based heat source; optionally wherein, using the heat recovered in the recuperative reformer as a portion of the heat input to the reforming reaction, in combination with adding hydrogen from an external hydrogen source to the downstream product of the second reformate, reduces carbon dioxide emissions generated during ammonia production in comparison to a case where all of the heat is provided by the combustion-based heat source and no external hydrogen source is utilized.

7. The method of claim 1, wherein the downstream product of the second reformate is generated by:
converting the second reformate to a mixed synthesis gas by cooling the second reformate, converting carbon monoxide in the second reformate to carbon dioxide using one or more shift reactors, and condensing and separating excess steam from the second reformate; and
converting the mixed synthesis gas to a raw synthesis gas by capturing at least some carbon dioxide present in the mixed synthesis gas; optionally, wherein
the downstream product of the second reformate comprises the raw synthesis gas, and wherein the external hydrogen added to the raw synthesis gas makes up from 10% to 30% of the hydrogen required to produce ammonia.

8. A system comprising:
a recuperative reformer operable to generate a first reformate from a reformer feed comprising a hydrocarbon and steam;
an autothermal reformer operable to mix the first reformate with an oxidant to generate a second reformate;
an external hydrogen source for supplying hydrogen that is introducible to a downstream product of the second reformate to generate a conditioned downstream product; and
a downstream ammonia synthesis unit operable to generate ammonia from the conditioned downstream product.

9. The system of claim 8, wherein the recuperative reformer comprises:
a radiant section having a catalyst tube at least partially extending through the radiant section and a radiant section heat source that is operable to heat the catalyst tube to cause a reforming reaction by which the reformer feed is converted into the first reformate in the catalyst tube; and
an annular heat exchanger in the catalyst tube.

10. The system of claim 9, wherein:
the annular heat exchanger includes an outer annulus containing a catalyst bed;
the reformer feed is directable through the outer annulus and the catalyst bed where the reformer feed is heatable in part by a primary heat input from the radiant section heat source to convert the reformer feed to the first reformate by a reforming reaction; and
a heated catalyst effluent discharged from the catalyst bed is subsequently directable through at least one central tube of the annular heat exchanger whereby heat from the first reformate is recoverable and transferrable back to the catalyst bed as a secondary heat input to the reformer feed; optionally wherein, the catalyst bed is a structured catalyst bed.

11. The system of claim 8, wherein the hydrogen from the external hydrogen source is green hydrogen obtainable by electrolyzing water using renewable electrical energy.

12. The system of claim 8, further comprising at least one shift reactor operable to generate the downstream product of the second reformate by:
converting the second reformate to a mixed synthesis gas by cooling the second reformate, converting carbon monoxide in the second reformate to carbon dioxide using one or more shift reactors, and condensing and separating excess steam from the second reformate; and
converting the mixed synthesis gas to a raw synthesis gas by capturing at least some carbon dioxide present in the mixed synthesis gas; optionally, further comprising
the external hydrogen source configured for supplying from 10% to 30% of the hydrogen required to produce ammonia, wherein the downstream product of the second reformate comprises the raw synthesis gas.

13. A method of retrofitting an existing ammonia production system having a primary reformer that generates a first reformate from a reformer feed comprising a hydrocarbon, and a secondary reformer that generates a second reformate by mixing the first reformate with an oxidant, the method comprising:
installing an annular heat exchanger in a catalyst tube at least partially extending through a radiant section of the primary reformer; and
at a location downstream of the secondary reformer, and downstream of a cooling and shift unit and a carbon capture unit that are collectively used to convert the second reformate to a cooled raw synthesis gas, fluidly connecting a pathway for carrying the raw synthesis gas to an external hydrogen source and introducing hydrogen into the pathway.

14. The method of claim 13, wherein the annular heat exchanger includes:
an outer annulus containing a structured catalyst bed through which the reformer feed is directed and heated in part by a primary heat input from a radiant section heat source and wherein the reformer feed is converted to the first reformate by a reforming reaction; and
at least one central tube through which a heated catalyst effluent discharged from the catalyst bed is subsequently directed and wherein heat from the first reformate is recovered and transferred back to the catalyst bed as a secondary heat input to the reforming reaction.

15. The method of claim 13, wherein the location is a conditioning section of the ammonia production system in which the raw synthesis gas is subjected to methanation of remaining carbon oxides in the raw synthesis gas; or
wherein the external hydrogen source is a green hydrogen source; optionally wherein, the green hydrogen source is a water electrolyzer powered by renewable electrical energy.
